# EUROPEAN PATENT APPLICATION

(11) **EP 1 642 709 A1**
(43) Date of publication of application: **05.04.2006**
(21) Application number: 04380199.2
(22) Date of filing: 01.10.2004
(51) Int. Cl.: B32B 27/32, B32B 5/18, B32B 27/40, G10K 11/168, C08L 23/02, C08K 3/00, B29C 70/58

(54) **Thermoformable layered sheet and manufacturing process**

(71) Applicant: Centro Tecnologico de Grupo Copo, S.L., 36416 Mos, Pontevedra (ES)
(72) Inventor: Reyes Crespo, Horacio Juan, 36416 Mos-Pontevedra (ES)
(74) Representative: Temino Ceniceros, Ignacio

(57) **Abstract**

Thermoformable layered sheets are formed by two or more substrates, consisting of mixtures of polyolefins with mineral loads homogenised by means of elastomeric polymers, in their middle (2) or lower (5) layer, and polyolefins with elastomeric composites in the upper or external layers (1) and (4); the performance of the procedure for obtaining the sheets is provided by a process of co-extrusion in which mixing is made of the different components giving a product that produces panels by simultaneously effecting the calendering of said products for obtaining the end pieces by vacuum moulding, pieces that will be applied as interior upholstery for vehicles, providing them with the required acoustic and thermal insulation and a high level of comfort.

## Description

### OBJECT OF THE INVENTION

The present invention refers to thermoformable sheets of two or more substrates, consisting of mixtures of polyolefins with mineral loads and with elastomeric composites, used for providing the upholstery inside vehicles as applied to the floors of the vehicles, as well as to the wheel housings, under-floor storage areas, linings and other parts of a vehicle.

The invention also deals with the procedure to be followed for the manufacture of said layered material.

The aim of the invention is to provide a material based on multi-layer thermoformable sheets, by means of a simple process, capable of absorbing nearly all noise as well as vibrations, and provide the vehicle in which it is to be fitted with a high level of comfort.

### BACKGROUND TO THE INVENTION

Regarding the interior areas of different kinds of vehicles currently available on the market, it is standard practice to use different kinds of materials obtained in different ways for producing flooring, wheel housings, under-floor storage areas, linings, in short, all nature of interior upholstery, with a series of characteristics and features that consumers demand nowadays.

The purpose of fitting this internal upholstery inside vehicles, apart from the fact that from a decorative point of view it is much more attractive and pleasing to the eye, creating an atmosphere that is significantly more comfortable, is to provide a series of features in terms of acoustics, absorbing the typical vibrations and noises that vehicles generate when in operation.

A further function of this internal upholstery is to provide the thermal insulation required in these cases for the vehicles.

At the present time on the market, these pieces for the inside upholstery on cars are produced in two different ways: in the majority of cases the procedure applied involves the injection of plastic, and at other times the system used involves the moulding of the different materials. However, neither of these two systems manages to optimise the features that are required for this type of material in terms of the wear caused by rubbing or by scratching.

A further problem arising from the methods currently used is that the production of the pieces generally involves the separate application of different products, whereby each product fulfils certain specific characteristics, and then the subsequent overall assembly of all the components is performed.

This method involves a greater number of steps in the overall process of producing the pieces, which considerably complicates the process, at the same time as it increases the costs involved in the equipment required for undertaking it.

### DESCRIPTION OF THE INVENTION

The procedure for manufacturing thermoformable layered sheets as proposed by the invention provides a fully satisfactory solution to the problems posed above.

It is a process for producing thermoformable sheets of two or more substrates, consisting of mixtures of polyolefins with mineral loads in their middle layer and polyolefins with elastomeric composites in the external layers, so becoming multi-layer thermoformable sheets.

These thermoformable sheets are used for providing the upholstery inside vehicles, fitted to the floors of the vehicles, to the wheel housings, under-floor storage areas, linings in the boot area and other appropriate parts of the vehicle.

The composition of these sheets is based largely on the use of polyolefms with mixtures of mineral loads and elastomeric additives, whereby each sheet is to consist of several layers, with the composition of the sheets always having a middle or lower layer and an upper or external layer, whose composition and characteristics are different.

The middle or lower layer consists of a high content of mineral load, in a proportion that ranges between 20 and 80%. This mineral load is made up of carbonates or talcum powder, and is homogenised through the addition of elastomeric polymers, which in turn act as product load. Consequently, this provides a composite with a compact and rigid appearance.

This will be the middle or lower layer depending on the number of layers constituting the product: if there are only two, then it will be the lower one, but if the product comprises more than two layers, it will be the middle one.

The upper or external layer consists of a mixture of polyolefins and a high content of elastomeric load, with proportions ranging between 15 and 50%, which will give the product obtained a soft and pliable appearance.

The procedure for obtaining the thermoformable layered sheets, as per this invention, consists of a process of co-extrusion, which is to involve the mixing of polyolefins, elastomers and mineral loads differentiated in each one of the layers.

Subsequently, the process allows for the obtaining of panels by simultaneously calendering the previously laminated products on a co-extrusion of up to three layers, with the end result being a multi-layer product.

The composite described above may be processed, for obtaining the different pieces, using innovative techniques, which allows for substituting the standard process of plastic injection with other methods such as vacuum moulding, jet moulding or pressure moulding.

Finally, in the same process of production by extrusion, the external finish of this multi-layer product allows for decorative finishes involving serigraphy, photo-printing, stamping, etc as well textured personalisations, namely engravings, by means of the addition of a printed sheet, with the option available of giving it different colour finishes.

The middle or lower layer permits, in the same thermoforming process, a finish involving polyurethane foaming, so providing better insulating, soundproofing and comfort features. In addition, inclusion may be made of other chemical components that facilitate the bond between the surface of said layer and the polyurethane foam.

### DESCRIPTION OF THE DRAWINGS

In order to complement the description that is being given and to further a better understanding of the nature of the invention, in accordance with a preferential example of the practical performance of the same, attachment is made, as an integral part of said description, of a set of drawings that for illustrative and not restrictive purposes depict the following:
Figure 1. It provides a schematic depiction of a thermoformable layered sheet as proposed by the invention, in which three layers can be seen, an upper, a middle and a lower one.
Figure 2. It provides a schematic depiction of another thermoformable layered sheet, in which only two layers can be seen: an upper and a lower one.

### PREFERRED EMBODYMENT OF THE INVENTION

On the basis of the above figures, in accordance with an example of a preferential performance of the invention, it may be seen how the thermoformable layered sheets, produced as per the manufacturing procedure that the invention propounds, consist of a series of layers that imbue it with the specifications required for its use in providing upholstery for the inside of vehicles.

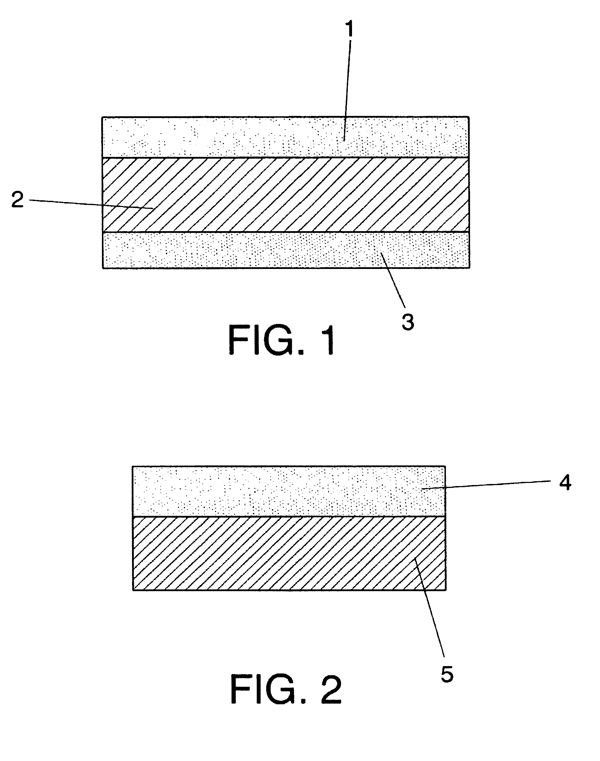

Specifically, the layered sheet depicted in figure 1 consists of three layers: an upper layer (1), a middle layer (2) and a lower layer (3); noteworthy amongst these layers is the upper or external layer (1) consisting of mixtures of polyolefins and elastomeric composites, and the middle layer (2), with a high content of mineral load based on carbonates or talcum powder, which is homogenised by means of elastomeric polymers, with the subsequent application of polyurethane foam.

Figure 2 depicts a layered sheet similar to the one in figure 1, but which is made up of only two layers, an upper layer (4) with similar characteristics to the previous upper or external layer (1), and a lower layer (5), which has the same properties that had been assigned to the middle layer (2) in figure 1.

The performance of this procedure for obtaining thermoformable layered sheets is undertaken by means of a co-extrusion process involving the mixing of polyolefins, elastomers and mineral loads differentiated in each one of the layers. Once the product has been obtained through the mixing of the various products, the process permits panels to be produced by simultaneously calendering said products laminated beforehand on a co-extrusion of up to three layers, producing a final multi-layer product. Finally, the different pieces can be obtained by a range of methods such as vacuum moulding, jet moulding or pressure moulding.

The use of sheets of this kind constitutes a significant technological contribution regarding those in standard use, providing improvements in terms of acoustics, thermal insulation, elasticity, etc, allowing for major pressing with a view to subsequent moulding, by means of the low temperature vacuum technique, low combustibility, with a value less than or equal to 100 mm/min, resistance to wear, with a value greater than or equal to 3/4, resistance to acids and chemical agents.

The contribution of each layer regarding the required specifications is different, so the middle or lower layer provides soundproofing properties that are above normal, as the polyolefins - elastomer - mineral load composite absorbs low sound frequencies and the polyurethane absorbs high frequencies, forming a composite that absorbs all sound, as well as vibrations, providing the vehicle with a high level of comfort.

On the other hand, the upper or external layer, by being composed of polyolefins with elastomers, produces an elastic product with relatively low resistance, being easily shaped and fashioned by mechanical forces, resistant to wear and to different chemical actions, maintaining its high level of impermeability.

Given its composition of polyolefins, this product is 100% recyclable for producing pieces of the same characteristics, in compliance with regulations on quality and environment laid down for the finished product.

A further advantage provided by the use of products such as those described beforehand is that it produces pieces that incorporate said products, involving only two processes, thereby differentiating itself as a superior product to those normally used in this field.

It is also important to note another series of advantages associated with the use of this kind of thermoformable layered sheets for obtaining inner linings for vehicles:
- The product acquires the necessary properties to be able to withstand wear such as rubbing and scratching, as well as provide a range of colours through the addition of different colourings to the composite.
- A product is obtained that is easily malleable in process, at temperatures below other commonly used processes.
- The product's impermeability imbues it with special importance upon being fitted into vehicles, as it can be washed with no detriment whatsoever to its functional properties.
- It provides the option to produce the pieces with a serigraphed fmish with different decorative designs by means of the incorporation of a printed film.

## Claims

1. Thermoformable layered sheet, of those normally used in the car industry for producing interior upholstery, **characterised by** the fact that it consists of two or more layers, with the upper layer (1 - 4) consisting of mixtures of polyolefins and a high content of elastomeric load in a proportion ranging between 15 and 50%, and a middle (2) or lower (5) layer consisting of mineral loads in a proportion ranging between 20 and 80%, with polyolefins and elastomer composites.

2. Thermoformable layered sheet, as per claim 1, **characterised by** the fact that the mineral load that is incorporated into the middle (2) or lower (5) layer is selected between carbonates and talcum powder.

3. Thermoformable layered sheet, as per claim 1, **characterised by** the fact that the middle (2) or lower (5) layer may be finished with polyurethane foaming to improve its acoustic properties.

4. Thermoformable layered sheet, as per claim 1, **characterised by** the fact that the middle (2) or lower (5) layer optionally includes other layers of chemical components that facilitate cohesion between said layer and the polyurethane foam.

5. Manufacturing procedure for thermoformable layered sheets, as per the preceding claims, **characterised by** the fact that it consists of a co-extrusion process involving the mixing of polyolefins, elastomers and mineral loads in suitable proportions.

6. Manufacturing procedure for thermoformable layered sheets, as per claim 4, **characterised by** the fact that it produces panels by simultaneously calendering previously laminated products on a co-extrusion of up to three layers, producing a final multi-layer product.

7. Manufacturing procedure for thermoformable layered sheets, as per claim 4, **characterised by** the fact that the end product allows for the pieces to be obtained by vacuum moulding, jet moulding or pressure moulding.

8. Manufacturing procedure for thermoformable layered sheets, as per claim 4, **characterised by** the fact that the option exists to obtain an external finish on the product, in the same co-extrusion process, allowing for decorative finishes involving serigraphy, photo-printing, stamping and such like by means of the addition of a printed film.
